**Europäisches Patentamt**

(19) **European Patent Office**

**Office européen des brevets**

(11) Veröffentlichungsnummer: **0 017 045**
**B1**

(12) **EUROPÄISCHE PATENTSCHRIFT**

(45) Veröffentlichungstag der Patentschrift:
**27.07.83**

(21) Anmeldenummer: **80101317.8**

(22) Anmeldetag: **13.03.80**

(51) Int. Cl.³: **B 63 H 23/08,** F 16 H 3/60

(54) Schiffsantriebsanlage.

(30) Priorität: **03.04.79 DE 2913255**

(43) Veröffentlichungstag der Anmeldung:
**15.10.80 Patentblatt 80/21**

(45) Bekanntmachung des Hinweises auf die Patenterteilung:
**27.07.83 Patentblatt 83/30**

(84) Benannte Vertragsstaaten:
**FR GB IT NL SE**

(56) Entgegenhaltungen:
**DE-A-1 531 737**
**DE-B-1 245 790**
**FR-A-920 419**
**FR-A-1 047 596**
**FR-A-2 397 324**
**US-A-2 961 078**
**US-A-3 618 719**
**US-A-4 051 679**

(73) Patentinhaber: **AKTIEN-GESELLSCHAFT "WESER",
Werftstrasse 160 Postfach 210 280,
D-2800 Bremen 21 (DE)**

(72) Erfinder: **Schneider, Heinz, Barbarossastrasse 29,
D-2800 Bremen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Schiffsantriebsanlage

Die Erfindung betrifft eine Schiffsantriebsanlage, bestehend aus einem Antriebsmotor und einem umsteuerbaren Zahnraduntersetzungsgetriebe.

Die DE-C-450 252 zeigt eine Schiffsantriebsanlage aus einem stets in gleicher Drehrichtung umlaufenden Antriebsmotor und aus einem in der Drehrichtung umsteuerbaren Zahnraduntersetzungsgetriebe. Zur Umsteuerung der Drehrichtung ist dem aus einem Ritzel und einem Großrad bestehenden Untersetzungsgetriebe für die Vorwärtsfahrt ein Zahnradpaar vorgelegt, so daß eine der Drehrichtungen über hydrodynamische Schaltkupplungen wahlweise kuppelbar ist.

In Verbindung mit einer Antriebsturbine und einem Planetenraduntersetzungsgetriebe sind mechanische Schaltkupplungen in einer gleichartigen Ausbildung aus der US-A-4 051 679 bekannt.

Demgegenüber liegt der Erfindung die Aufgabe zugrunde, ein Schiffsgetriebe mit Umsteuerung in der Weise auszubilden, daß die Mittel zur Umsteuerung gleichzeitig zur Wandlung des Drehmoments nutzbar sind und daß das Getriebe zur Übertragung großer Drehmomente bei ggf. stoßartiger Belastung geeignet ist.

Diese Aufgabe wird erfindungsgemäß durch eine Schiffsantriebsanlage gelöst, die aus einem in der Drehrichtung umsteuerbaren Antriebsmotor und aus einem umsteuerbaren Zahnradgetriebe besteht, welches für die beiden wahlweise kuppelbaren Drehrichtungen unterschiedliche Untersetzungsverhältnisse aufweist.

Wesentlicher Vorteil ist, daß die Propellerwelle nunmehr nicht nur bei Rückwärtsfahrt über das Umkehrgetriebe mit geringerer Drehzahl und einem höheren Drehmoment beaufschlagt werden kann, sondern daß dies auch in Vorwärtsdrehrichtung über das Umkehrgetriebe durch Umsteuern der Antriebsmotoren erreichbar ist. Ändert sich die Drehrichtung der Antriebsmotoren und wird gleichzeitig das Umkehrgetriebe zugeschaltet, bleibt die Propellerwellendrehrichtung erhalten. Bei Fahrten in schwerem Eis ermöglicht dies sowohl bei Rückwärtsfahrt als auch bei Vorausfahrt ein hohes Drehmoment in der Propellerwelle bei reduzierter Drehzahl. Ein durch Eis blockierter Propeller kann dadurch besser mit hohem Drehmoment und kleiner Drehzahl oder umgekehrt in beiden Drehrichtungen manövriert werden, so daß sich für die Eisfahrt oder auch für andere schwierige Fahrtbedingungen erhebliche Verbesserungen gegenüber bisherigen Antrieben ergeben.

Eine bevorzugte Anwendung findet die Erfindung bei Schiffsantriebsanlagen mit einem Zahnraduntersetzungsgetriebe aus einem Ritzel und einem Großrad, einer hydrodynamischen und einer weiteren wahlweise schaltbaren Kupplung zur Übertragung des Drehmoments der Antriebsmaschine auf das Zahnraduntersetzungsgetriebe sowie mit einem Umkehrgetriebe zwischen dem Zahnraduntersetzungsgetriebe und einer der beiden Kupplungen, deren Primärteile mittels einer das Getrieberitzel durchgreifenden Welle miteinander verbunden sind. Konstruktiv wird die Erfindung bei einer solchen Schiffsantriebsanlage durch ein als Umkehrgetriebe ausgebildetes Vorgelege aus einem Zahnradpaar mit einem von dem Zahnraduntersetzungsgetriebe abweichenden Untersetzungsverhältnis gestaltet, wobei das Ritzel des Vorgeleges koaxial zum Ritzel des Zahnraduntersetzungsgetriebes im Getriebegehäuse angeordnet ist und das Umkehrrad mit dem Großrad des Untersetzungsgetriebes kämmt und wobei die beiden Kupplungen, von denen wenigstens eine als hydrodynamische Kupplung ausgebildet ist, einander gegenüberliegend mit ihren Gehäusen seitlich am Getriebegehäuse befestigt sind. Dadurch kann die Schiffsantriebsanlage als Hochleistungsanlage für extrem große Drehmomente ausgelegt werden, so daß sie sich durch gute Drehschwingungssysteme, durch torsionselastisches Verhalten beim Anfahren, Manövrieren und beim Zuschalten von Motoren in Mehrmotorenanlagen, durch biegeelastische Kompensation eventueller Radial- und Winkelversetzungen zwischen Antriebsmotor und Zahnraduntersetzungsgetriebe sowie durch andere anerkannte Vorteile hydrodynamischer Zwischenglieder auszeichnet. Die Schiffsantriebsanlage ermöglicht trotz großer Leistung ein kraftschlüssiges Umsteuermanöver, wobei der Umsteuervorgang aufgrund der Ergebnisse von Probefahrtsversuchen optimal eingestellt werden kann. Das ein Vorgelege bildende Zahnradpaar gestattet eine technische Getriebeauslegung, bei der die Abtriebswelle eine geringere Drehzahl ausführt und mit einem wesentlich erhöhten Drehmoment beaufschlagt werden kann.

Die Rückwärtsfahrt des Schiffes kann aufgrund der erfindungsgemäßen Auslegung entweder durch Umsteuerung der Antriebsmotoren oder durch das Einschalten des Umkehrgetriebes erreicht werden, so daß im letzteren Fall das Umsteuermanöver für die Propellerwellendrehrichtung bei gleichbleibender Drehrichtung der Antriebsmotoren erreicht wird.

Zur näheren Erläuterung der wesentlichen Erfindungsmerkmale und besonderer Einzelheiten sind auf der Zeichnung mehrere Ausführungsbeispiele stark schematisiert jeweils in Draufsicht und mit Seitenansicht des Zahnraduntersetzungsgetriebes dargestellt. Es zeigt

Fig. 1 ein Schiffsgetriebe mit einfacher Schrägverzahnung sowie mit einem Umsteuergetriebe

Fig. 2 ein Schiffsgetriebe mit Doppelschrägverzahnung sowie mit einem Umsteuergetriebe

Fig. 3 ein Schiffsgetriebe mit einfacher Schrägverzahnung sowie mit Umsteuergetriebe und mit Überbrückungskupplung

Fig. 4 ein Schiffsgetriebe mit Doppelschrägverzahnung sowie mit einem Umsteuergetriebe und einer Überbrückungskupplung.

Bei den Ausführungsbeispielen ist einem gemeinsamen Getriebegehäuse 1 ein mechanisches Untersetzungsgetriebe aus einem Getrieberitzel 2 und einem großen Getrieberad 3 gelagert, wobei letzteres auf der Abtriebswelle sitzt, die mit der Propellerwelle fest verbunden ist. Koaxial zu dem Getrieberitzel 2 sind an zwei sich gegenüberliegenden Seiten des Getriebegehäuses 1 in Gehäuseteilen 4 und 5 hydrodynamische Kupplungen 6 und 7, insbesondere Föttinger-Kupplungen angeordnet. Die Primärteile 8 und 9 sind durch eine Welle 10 fest miteinander und mit der Kurbelwelle je eines Antriebsmotors 11 verbunden. Das Sekundärteil 12 der Kupplung 7 ist mit dem Getrieberitzel 2 fest verbunden, welches hohl gebohrt ist und von der Welle 10 durchgriffen wird. Das Sekundärteil 13 der anderen Kupplung 6 ist mit dem Umkehrritzel 14 eines Zahnradpaares verbunden, welches ein Umkehrvorgelege bildet und dessen Umkehrrad 15 zweiteilig ausgebildet ist, so daß der eine Teil 16 ein Umkehrritzel für das große Getrieberad 3 bildet. Das Umkehrritzel 14 des Vorgeleges ist ebenfalls hohl gebohrt und wird von der Welle 10 durchgriffen. Bei der Vorwärtsfahrt treibt der Antriebsmotor 11 über die Welle 10 bei gefüllter Kupplung 7 über deren Sekundärteil 12 das Ritzel 2 des Zahnraduntersetzungsgetriebes an, so daß dessen Großrad 3 die Propellerwelle in Vorwärtsdrehung versetzt. Zur Umsteuerung der Propellerwellendrehrichtung wird bei gleichbleibender Drehrichtung des Antriebsmotors 11 die Kupplung 6 gefüllt und die Kupplung 7 entleert, so daß nunmehr das Sekundärteil 13 der Kupplung 6 das Umkehrritzel 14 antreibt und über das Umkehrrad 15 mit dem Umkehrritzel 16 für das Zahnradübersetzungsgetriebe eine Änderung der Drehrichtung des großen Getrieberades 3 und damit der Propellerwelle erfolgt. Die nicht belasteten Kupplungsteile laufen jeweils mit. Bei Mehrmotorenanlagen erfolgt beispielsweise eine spiegelbildliche Anordnung zweier Antriebsritzel 2 und Umkehrvorgelege 14, 15, 16 mit Kupplungen 6 und 7 für einen zweiten Antriebsmotor 17, angeordnet in einem gemeinsamen Getriebegehäuse, wie es übereinstimmend in allen Ausführungsbeispielen dargestellt ist. Aus den schematisch skizzierten Anordnungen wird deutlich, daß die Welle 10 auch an dem dem Motor 11 abgewandten Ende — in der Zeichnung unten — mit einem weiteren Antriebsmotor gekuppelt werden kann, so daß ein in der beschriebenen Weise ausgebildetes Getriebe nicht nur für Einmotor- oder Zweimotorenanlagen, sondern auch für Dreimotoren- oder Viermotorenanlagen ausgeführt werden kann. Außerdem ist zu den Ausführungsbeispielen in den einzelnen Zeichnungsfiguren schematisch angedeutet, daß die Kupplungen 6 und 7 jeweils in eigenen Gehäusen 4 und 5 untergebracht sind, welche mit dem Getriebegehäuse 1 verschraubt oder in anderer Weise fest verbunden sind. Dadurch ergibt sich eine vorteilhafte Möglichkeit zur Anordnung der Lager.

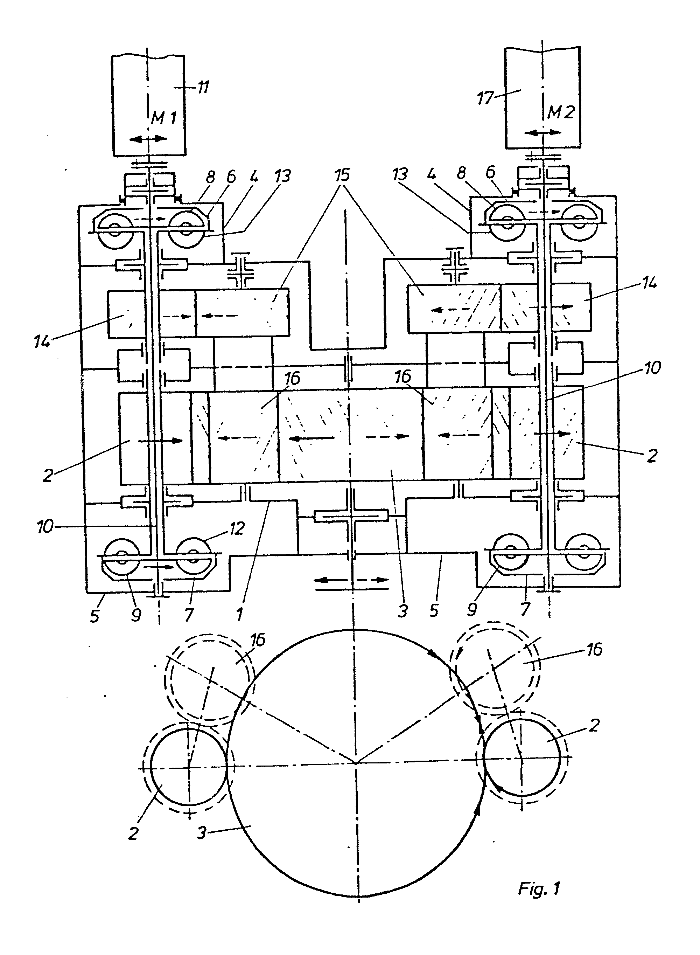

In der einfachsten Auslegung nach der Fig. 1 sind die Zahnräder mit einer einfachen Schrägverzahnung versehen, so daß Ausgleichselemente für Axialbewegungen zwischen dem Zahnradpaar des Vorgeleges und den Zahnrädern des Umsetzungsgetriebes nicht erforderlich sind.

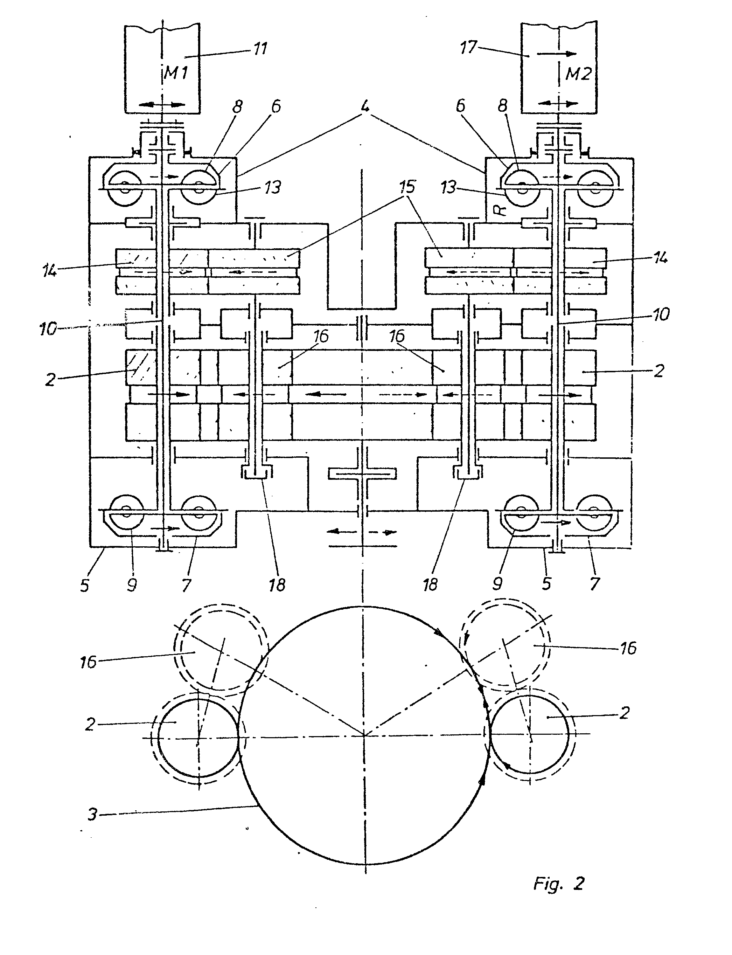

Das Ausführungsbeispiel in Fig. 2 entspricht in wesentlichen Teilen der Anordnung nach Fig. 1, jedoch ist die Verzahnung als Doppelschrägverzahnung (Pfeilverzahnung) ausgeführt, wie es insbesondere bei Getrieben für hohe Leistungen üblich ist. Um in diesem Falle einen axialen Ausgleich zwischen dem Umkehrrad 15 und dem als Umkehrritzel 16 für das Zahnraduntersetzungsgetriebe wirkenden Teil zu ermöglichen, sind diese beiden Zahnradteile 15 und 16 ebenfalls in einer Quillshaft-Ausbildung miteinander verbunden, wobei die Welle des Teiles 15 das hohl gebohrte Teil 16 durchgreift und mit diesem auf der dem Teil 15 gegenüberliegenden Seite durch ein axialelastisches Glied, z. B. durch eine Klauenkupplung 18, verbunden ist.

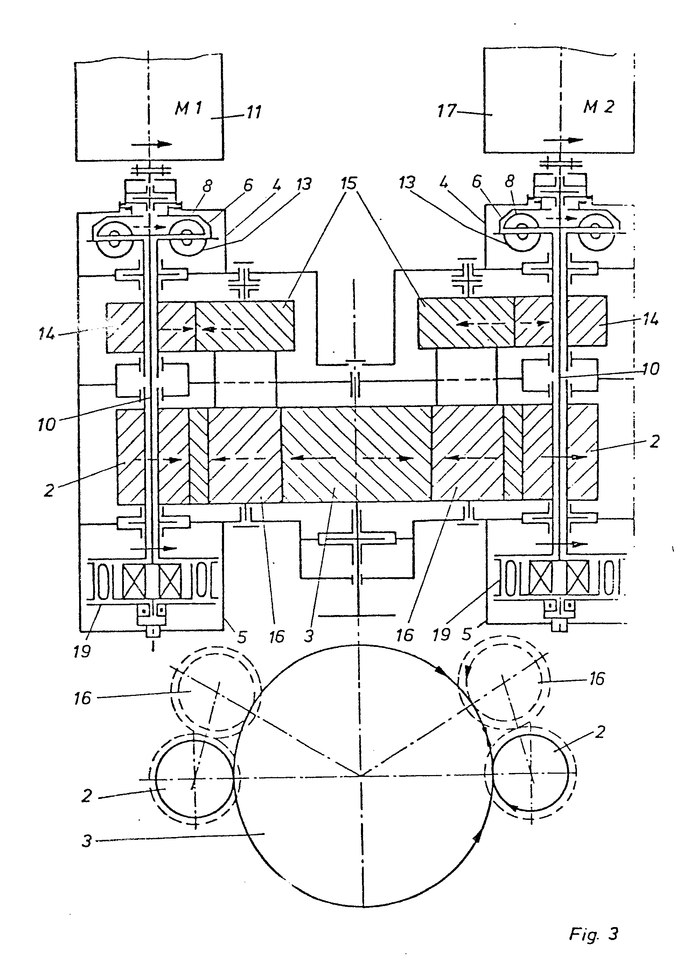

In der Fig. 3 ist eine dem Beispiel in Fig. 1 entsprechende Anordnung dargestellt, wobei die Kupplung 7 gemäß Fig. 1 durch eine mechanische Schaltkupplung 19 ersetzt ist, welche ggf. ein torsionselastisches Einbauteil zur Dämpfung von Torsionsschwingungen aufweisen kann. Die Anordnung einer solchen schlupffrei arbeitenden Kupplung ist empfehlenswert, wenn neben Fahrten in schwierigen Gewässern längere Fahrten im freien Wasser durchgeführt werden.

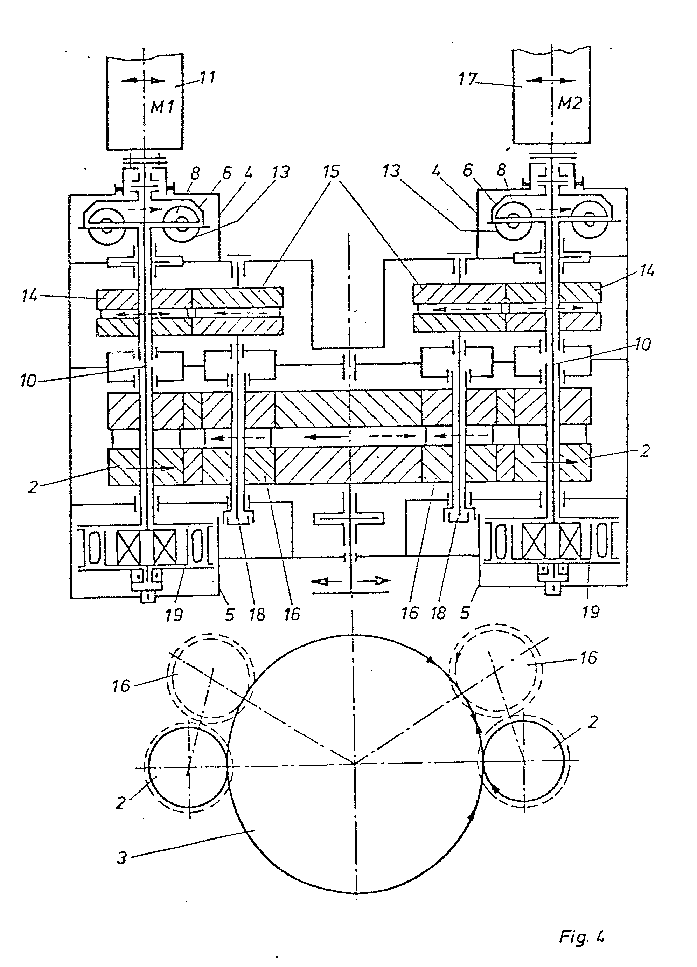

Das Beispiel in der Fig. 4 entspricht im wesentlichen der Anordnung in Fig. 2, wobei doppelschrägverzahnte Getrieberäder für hohe Drehmomentübertragungen vorgesehen sind und das Zahnradpaar 14, 15 axialelastisch mittels einer Quillshaft-Ausbildung mit axialelastischer Kupplung 18 von dem Zahnraduntersetzungsgetriebe getrennt ist. Die Kupplung 7 entsprechend Fig. 2 ist in diesem Falle ebenfalls durch eine mechanische Schaltkupplung 19 ersetzt, die einen schlupffreien Betrieb ermöglicht und ggf. ein Dämpfungsglied für Drehschwingungen und stoßartige Drehbelastungen aufweist. Kupplungen dieser Art gehören ebenfalls zum Stande der Technik und sind an sich nicht Gegenstand der Erfindung.

## Patentansprüche

1. Schiffsantriebsanlage, bestehend aus einem in der Drehrichtung umsteuerbaren Antriebsmotor (11, 17) und aus einem umsteuerbaren Zahnraduntersetzungsgetriebe (2, 14, 15), welches für die beiden wahlweise kuppelbaren Drehrichtungen unterschiedliche Untersetzungsverhältnisse aufweist.

2. Schiffsantriebsanlage nach Anspruch 1 mit einem Zahnraduntersetzungsgetriebe aus einem Ritzel und einem Großrad, einer hydrodynamischen und einer weiteren wahlweise schaltbaren Kupplung (4, 5) zur Übertragung des Drehmoments der Antriebsmaschine (11, 17) auf das Zahnraduntersetzungsgetriebe sowie mit einem Umkehrgetriebe zwischen dem Zahnraduntersetzungsgetriebe und einer der beiden Kupplungen, deren Primärteile mittels einer das Getrieberitzel durchgreifenden Welle miteinander verbunden sind, gekennzeichnet durch ein als Umkehrgetriebe ausgebildetes Vorgelege aus einem Zahnradpaar (14, 15) mit einem von dem Zahnraduntersetzungsgetriebe (2, 3) abweichenden Untersetzungsverhältnis, wobei das Ritzel (14) des Vorgeleges koaxial zum Ritzel (2) des Zahnraduntersetzungsgetriebes im Getriebegehäuse (1) angeordnet ist und das Umkehrrad mit dem Großrad des Untersetzungsgetriebes kämmt und wobei die beiden Kupplungen (6, 7), von denen wenigstens eine als hydrodynamische Kupplung ausgebildet ist, einander gegenüberliegend mit ihren Gehäusen seitlich am Getriebegehäuse befestigt sind.

3. Schiffsantriebsanlage nach Anspruch 2, dadurch gekennzeichnet, daß das Umkehrrad (15) des Vorgeleges radial und axial elastisch mit einem Umkehrritzel (16) des Untersetzungsgetriebes gekuppelt ist.

4. Schiffsantriebsanlage nach Anspruch 3, dadurch gekennzeichnet, daß die Welle des Umkehrrades (15) des Vorgeleges das Umkehrritzel (16) des Untersetzungsgetriebes durchgreift und mit diesem auf der dem Umkehrrad gegenüberliegenden Seite mit einer radial und axial beweglichen Klauenkupplung (18) verbunden ist.

## Claims

1. A ship's drive system, consisting of a drive motor (11, 17) controllable in the direction of rotation and controllable reduction gearing (2, 14, 15) having various reduction ratios for each of the two selectably connectable directions of rotation.

2. A ship's drive system according to claim 1 having reduction gearing consisting of a gear and pinion, a hydrodynamic coupling and a further selectably connectable coupling (4, 5) for the transmission of the drive-unit (11, 17) torque to the reduction gearing as well as a reversing mechanism between the said reduction gearing and one of the two couplings whose primary parts are connected together by a shaft passing through the gearbox pinion, a feature of which is a reversing mechanism formed from an intermediate gear stage consisting of a pair of gears (14, 15) having a reduction ratio differing from that of the reduction gearing (2, 3), whereby the pinion (14) of the intermediate gear stage is arranged co-axially to the pinion of the reduction gearing in the gearbox housing (1) with the reversing gear-wheel meshing with the large gear-wheel of the reduction gearing and whereby the two couplings (6, 7), of which at least one is in the form of a hydrodynamic coupling, are mounted opposite to one another having their housings attached laterally to the gearbox housing.

3. A ship's drive system according to claim 2, a feature of which is that the reversing gear-wheel (15) of the intermediate gear stage is coupled elastically, radially and axially, with a reversing pinion (16) of the reduction gearing.

4. A ship's drive system according to claim 3, a feature of which is that the shaft of the reversing gear-wheel (15) of the intermediate gear stage passes through the reversing pinion (16) of the reduction gearing and is connected, together with the said reversing pinion, to a dog-clutch (18) having radial and axial freedom of movement located on the side opposite to the reversing gear-wheel.

## Revendications

1. Installation de propulsion de navires, constituée par un moteur d'entraînement (11, 17) réversible, et par un démultiplicateur réversible à engrenage (2, 14, 15) ayant des rapports de démultiplication différents pour les deux sens de rotation d'accouplement pouvant être choisis.

2. Installation de propulsion de navires selon la revendication 1, comportant un démultiplicateur à engrenage constitué par un pignon et une grande roue, un accouplement hydrodynamique et un autre accouplement pouvant être manoeuvré à volonté (4, 5) pour transmettre le couple de la machine d'entraînement (11, 17) au démultiplicateur à engrenage, et comprenant un inverseur de sens de marche entre le démultiplicateur à engrenage et l'un des deux accouplements, dont les éléments primaires sont reliés au moyen d'un arbre qui traverse le pignon du mécanisme, caractérisée par un renvoi réalisé sous forme d'un inverseur de sens de marche, constitué par un couple de roues dentées (14, 15) et ayant un rapport de démultiplication différent de celui du démultiplicateur à engrenage (2, 3), le pignon (14) du renvoi étant disposé coaxialement avec le pignon (2) du démultiplicateur à engrenage, dans le carter du mécanisme (1), la roue d'inversion s'engrenant avec la grande roue du démultiplicateur et les deux accouplements (6, 7), dont l'un au moins est un accouplement hydrodynamique, étant fixés sur le côté du carter du mécanisme, par leurs carters, l'un en face de l'autre.

3. Installation de propulsion de navires selon la revendication 2, caractérisée en ce que la roue d'inversion (15) du renvoi est accouplée, de façon élastique radialement et axialement, à un pignon d'inversion (16) du démultiplicateur.

4. Installation de propulsion de navires selon la revendication 3, caractérisée en ce que l'arbre de la roue d'inversion (15) du renvoi traverse le pignon d'inversion (16) du démultiplicateur et est relié avec ce dernier du côté faisant face à la roue d'inversion, par un embrayage à griffes (18) mobile radialement et axialement.

Fig. 1

Fig. 2

Fig. 3

*Fig. 4*